# EUROPÄISCHE PATENTANMELDUNG

(11) **EP 4 764 598 A1**
(43) Veröffentlichungstag der Anmeldung: **24.06.2026**
(21) Anmeldenummer: 24220663.9
(22) Anmeldetag: 17.12.2024
(51) Int. Cl.: G01S 7/481, G01S 17/89, G01C 13/00

(54) **VORRICHTUNG ZUM VERMESSEN EINER UMGEBUNG**

(71) Anmelder: RIEGL Laser Measurement Systems GmbH, 3580 Horn (AT)
(72) Erfinder: HOFBAUER, Andreas, 3910 Zwettl (AT); PFENNIGBAUER, Martin, 3430 Tulln (AT)
(74) Vertreter: Weiser Voith Gugler Patentanwälte Partnerschaft

(57) **Zusammenfassung**

Vorrichtung (1) zum Vermessen einer Umgebung (2) durch Laufzeitmessung eines daran reflektierten Laserstrahls (3) von einem wenig streuenden ersten Medium (4) aus, umfassend: einen Lasersender (5) zum Aussenden des Laserstrahls (3) auf ein Ziel (8) in der Umgebung (2), welchem ein stärker streuendes zweites Medium (9) vorgelagert ist, einen Empfänger (13) mit einer Detektionseinrichtung (14) zum Empfangen des an der Umgebung (2) reflektierten Laserstrahls (3), und eine mit dem Lasersender (5) und dem Empfänger (13) verbundene Auswerteeinheit (16) zum Ermitteln der Laufzeit des Laserstrahls (3), wobei der Empfänger (5) einen am Ziel (8) reflektierten ersten Strahlteil (19) von einem an der Grenze (18) zwischen erstem und zweitem Medium (4, 9) reflektierten zweiten Strahlteil (23) trennt und daraus gesonderte Ausgangssignale (24ᵢ) erzeugt, welche die Auswerteeinheit (16) getrennt auswertet.

## Beschreibung

Die vorliegende Erfindung betrifft eine Vorrichtung zum Vermessen einer Umgebung, insbesondere eines Gewässerbodens, durch Laufzeitmessung eines daran reflektierten Laserstrahls, umfassend: einen Lasersender zum Aussenden des Laserstrahls auf ein Ziel in der Umgebung als Sendestrahl, wobei die Vorrichtung von einem nicht oder wenig streuenden ersten Medium, insbesondere von Luft, umgeben und dem Ziel ein stärker streuendes zweites Medium, insbesondere das Wasser des Gewässers, vorgelagert ist, einen Empfänger mit einer Detektionseinrichtung zum Empfangen des an der Umgebung in Richtung Empfänger reflektierten Sendestrahls als Empfangsstrahl, mit einer den Empfangsstrahl auf die Detektionseinrichtung bündelnden Sammeloptik und mit einem Sichtfeld, das größer ist als die Divergenz des vom Lasersender ausgesandten Laserstrahls, und eine mit dem Lasersender und dem Empfänger verbundene Auswerteeinheit zum Ermitteln der Laufzeit des Laserstrahls.

Vorrichtungen dieser Art sind z.B. in der EP 3 182 159 B1 oder in der EP 4 390 445 A1 beschrieben und werden beispielsweise von einem Luft- oder Wasserfahrzeug mitgeführt, um Umgebungen wie z.B. den Meeresgrund oder den Erdboden topographisch zu vermessen. Dazu wird ein gepulster oder modulierter Laserstrahl als Sendestrahl auf das Ziel oder nacheinander auf mehrere Ziele (auch: "Abtastpunkte") der Umgebung ausgesandt; aus der/den Laufzeitmessung/en des reflektierten Laserstrahls, d.h. des Sende- und des Empfangsstrahls, wird/werden die Zielentfernung/en und daraus - in Kenntnis der Position und Lage der Vorrichtung und der jeweiligen Sendestrahlrichtung - meist entweder ein Zielort ermittelt oder ein Modell der Umgebung erstellt, z.B. ein Punktemodell ("3D-Punktwolke"). In einigen Ausführungsformen haben solche Vorrichtungen ferner eine Scaneinheit, z.B. einen um eine Achse rotierenden oder schwingenden Spiegel oder eine um eine Achse rotierende oder schwingende Prismenscheibe, um die Umgebung linien-, zickzack-, wellen-, kreis- oder ellipsen- bzw. spiralförmig abzutasten.

Es ist auch möglich, eine solche Vorrichtung auf einem Landfahrzeug zu montieren, um z.B. Hausfassaden, Straßenschluchten oder Tunnel im Vorbeifahren zu vermessen, oder stationär aufzustellen, beispielsweise neben einem Berghang, um durch Vergleich aufeinanderfolgender Messungen allfällige Veränderungen des Hanges zu detektieren, oder in einem Tag- oder Untertagbergwerk, um dessen Abraum zu vermessen, über oder neben einem Förderband, um darauf bewegte Objekte zu vermessen, usw.

Trifft der Sendestrahl vom nicht oder wenig streuenden ersten auf das stärker streuende zweite Medium, z.B. ein Gewässer, ein Nebelfeld, Wolken oder Abgase, wird bereits ein Teil des Laserstrahls an der Mediengrenze reflektiert, davon ein gewisser Anteil auch zum Empfänger der Vorrichtung.

Infolge der Streuung des verbleibenden, in das zweite Medium eintretenden Teils des Laserstrahls im zweiten Medium, z.B. an Aerosolpartikeln in Nebel, Wolken oder Abgasen bzw. an stets vorhandener Wassertrübung beim Vermessen eines Gewässerbodens, wird der - im Allgemeinen möglichst wenig divergierende - Sendestrahl im zweiten Medium deutlich aufgeweitet. Dadurch gelangt meist lediglich ein geringer Teil des Sendestrahls durch das streuende zweite Medium hindurch bis zum Ziel und wird daran - z.B. diffus - reflektiert. Aus den vorgenannten Gründen gelangt auch von dem am Ziel reflektierten Teil nur ein geringer Teil durch das streuende zweite Medium hindurch und durch das erste Medium zum Empfänger. Die Vorrichtung muss diesen am Ziel reflektierten, meist äußerst schwachen ersten Strahlteil erfassen. Um dies zu erleichtern, ist für gewisse Empfängertypen bekannt, den Empfangsstrahl bewusst unscharf und dadurch möglichst großflächig auf der Detektionseinrichtung abzubilden. Allerdings gelangt auch der an der Grenze zwischen erstem und zweitem Medium und/oder vom zweiten Medium selbst reflektierte zweite Strahlteil des Laserstrahls zum Empfänger und erschwert die Erfassung des am Ziel reflektierten ersten Strahlteils.

Die Erfindung setzt sich zum Ziel, eine Vorrichtung zum Vermessen einer Umgebung zu schaffen, welche auch ein Ziel, dem ein stärker streuendes Medium vorgelagert ist, z.B. einen Gewässerboden, mit hoher Empfindlichkeit vermessen kann.

Dieses Ziel wird mit einer Vorrichtung der einleitend genannten Art erreicht, welche sich erfindungsgemäß dadurch auszeichnet, dass der Empfänger dazu ausgebildet ist, den ersten Strahlteil des Empfangsstrahls, welcher am Ziel reflektiert wurde, und den zweiten Strahlteil des Empfangsstrahls, welcher an der Grenze zwischen erstem und zweitem Medium und/oder vom zweiten Medium reflektiert wurde, voneinander zu trennen und in der Detektionseinrichtung aus den getrennten ersten und zweiten Strahlteilen gesonderte Ausgangssignale zu erzeugen, wobei die Auswerteeinheit dazu ausgebildet ist, die gesonderten Ausgangssignale der Detektionseinrichtung zum Ermitteln der Laufzeit des Laserstrahls getrennt auszulesen.

Der Erfindung liegt die Erkenntnis zugrunde, dass bei üblichen Detektionseinrichtungen, die als möglichst empfindliche Photosensoren z.B. Avalanche-Dioden ("Avalanche Photo Diodes", "APD") bzw. "Silicon Photo Multiplier" ("SiPM") Arrays od.dgl. verwenden, einige dieser Sensoren allenfalls nach ihrem Ansprechen auf einen Lichteinfall für kurze Zeit nicht erneut ansprechen können, also "geblendet" sind. Während dieser Zeit wird ein weiterer Lichteinfall, insbesondere der deutlich schwächere erste Strahlteil nach dem stärkeren zweiten Strahlteil des Empfangsstrahls, weniger zuverlässig erfasst. Beim Bündeln des Empfangsstrahls auf die Detektionseinrichtung werden die Reflexionen des bei Auftreffen auf die Grenze zwischen erstem und zweitem Medium noch wenig divergierten Sendestrahls am stärksten, die Reflexionen vom zweiten Medium weniger stark und jene am Ziel am schwächsten gebündelt, wodurch der erste und der zweite Strahlteil voneinander optisch getrennt werden. Es versteht sich, dass es sich dabei nicht um eine vollständige optische Trennung der beiden Strahlteile handelt. Vielmehr wird ein gewisser Anteil des schwächer gebündelten ersten Strahlteils in demselben Bereich auf die Detektionseinrichtung treffen wie der stärker gebündelte zweite Strahlteil, jedoch wird zumindest ein anderer Bereich der Detektionseinrichtung ausschließlich vom ersten Strahlteil und nicht vom zweiten Strahlteil getroffen. In jenem Bereich, in welchem die Detektionseinrichtung vom stark gebündelten zweiten Strahlteil getroffen wird, wird sie aufgrund der vorgenannten Blendwirkung vom stark gebündelten zweiten Strahlteil jedoch auch stark geblendet, sodass die Detektionseinrichtung in diesem Bereich ausschließlich oder fast ausschließlich ein Ausgangssignal für den zweiten Strahlteil erzeugt. Wenn gewünscht, kann ein allfälliges späteres Ausgangssignal, das die Detektionseinrichtung auf Grundlage des in jenem Bereich auftreffenden Teils des ersten Strahlteils bilden würde, unterdrückt werden. Insgesamt erzeugt die Detektionseinrichtung aus den getrennten beiden Strahlteilen zumindest weitestgehend gesonderte Ausgangssignale. Um diese gesonderten Ausgangssignale der Detektionseinrichtung zu erzeugen und deren getrennte Auswertung zu ermöglichen, gibt es erfindungsgemäß verschiedene Ausführungsformen und Varianten.

In einer besonders einfach aufgebauten ersten Ausführungsform ist die Detektionseinrichtung ein Array von Photodioden, wobei die Auswerteeinheit dazu ausgebildet ist, deren Ausgangssignale einzeln oder nach Photodiodenclustern getrennt auszulesen. Je nach Größe der Photodioden bzw. der Photodiodencluster trifft dabei jeweils der erste und der zweite Strahlteil auf eine oder mehrere der Photodioden oder Photodiodencluster auf. Neben dem einfachen Aufbau ohne weitere Optiken ermöglicht diese Ausführungsform hohe Flexibilität in der Anwendung, da der Empfänger je nach Erfordernis verschiedene Photodioden oder Photodiodencluster dem ersten oder dem zweiten Strahlteil zuordnen und die Auswerteeinheit entsprechend der Zuordnung auslesen kann. Diese Zuordnung kann entweder jeweils im Voraus vor dem Vermessen oder alternativ (oder zusätzlich) laufend während des Vermessens flexibel an die Erfordernisse angepasst werden.

Die Photodiodencluster haben in dieser Variante entweder jeweils ein gemeinsames Ausgangssignal oder jede Photodiode eines Clusters ein eigenes Ausgangssignal, wobei die Auswerteeinheit die Ausgangssignale eines Photodiodenclusters gemeinsam auswertet. Durch entsprechend flexible Zuordnung der Photodioden oder Photodiodencluster beim Auslesen ihrer Ausgangssignale kann die Vorrichtung in dieser Ausführungsform auch besonders vorteilhaft mit einer Scaneinheit kombiniert werden, wie weiter unten näher erläutert wird.

Besonders günstig ist in dieser ersten Ausführungsform, wenn die Auswerteeinheit eine eigene Konditionierschaltung für jedes Ausgangssignal der Photodioden oder der Photodiodencluster zum Konditionieren des Ausgangssignals und einen gemeinsamen Kombiniererbaustein zum variablen Kombinieren aller konditionierten Ausgangssignale umfasst. Dadurch können die häufig schwachen Ausgangssignale der einzelnen Photodioden oder Photodiodencluster separat aufbereitet und kombiniert werden, z.B. durch Filterung, Selektion, etc.

Vorteilhaft ist ferner, wenn die Auswerteeinheit in dieser Ausführungsform dazu ausgebildet ist, die Ausgangssignale einer äußeren ersten Photodiodengruppe getrennt von jenen einer zumindest annähernd kreisförmigen, von der ersten umgebenen zweiten Photodiodengruppe des Arrays auszulesen. Eine solche Gruppierung bildet die Trennung der näheren Reflexionen des zweiten Strahlteils von den entfernteren Reflexionen des ersten Strahlteils ab. Dabei können die Photodiodengruppen aus einzelnen Photodioden oder aus Photodiodenclustern gebildet sein. Ferner kann die genannte zweite Photodiodengruppe je nach Erfordernis zentral oder dezentral am Photodioden-Array liegen und insbesondere einzelne Photodioden oder Photodiodencluster nach Erfordernis wechselnd der ersten oder zweiten Photodiodengruppe zugeordnet werden.

In einer günstigen Variante ist die Auswerteeinheit ferner dazu ausgebildet, die Ausgangssignale einer ringförmig zwischen der genannten ersten und der genannten zweiten Photodiodengruppe angeordneten dritten Photodiodengruppe getrennt von jenen der beiden anderen Photodiodengruppen, d.h. getrennt von der genannten ersten und zweiten Photodiodengruppe, des Arrays auszulesen. Dies ermöglicht nicht nur die Unterscheidung zwischen erstem und zweitem Strahlteil des Empfangsstrahls, sondern zusätzlich auch die Unterscheidung der beiden Anteile des zweiten Strahlteils, nämlich jenes (an der Detektionseinrichtung innersten) Anteils, der an der Grenze zwischen erstem und zweitem Medium reflektiert wurde, von jenem (den innersten an der Detektionseinrichtung unmittelbar umgebenden) Anteil, der vom bzw. im zweiten Medium selbst reflektiert wurde.

Bevorzugt ist dabei ein Abstand zwischen Detektionseinrichtung und Sammeloptik veränderlich und/oder die Sammeloptik fokussierbar, wobei die Vorrichtung dazu ausgebildet ist, die Bildebene der genannten Grenze zwischen erstem und zweitem Medium auf die Detektionseinrichtung einzustellen. Auf diese Weise nimmt jener Teil des Empfangsstrahls, der an der Grenze zwischen erstem und zweitem Medium reflektiert wurde, die geringstmögliche Fläche auf dem Array von Photodioden ein, sodass für das Auslesen des am Ziel reflektierten ersten Strahlteils die größtmögliche Fläche verbleibt. Dies wirkt sich besonders günstig auf die Empfindlichkeit des Empfängers gegenüber Reflexionen am Ziel aus.

In einer besonders vorteilhaften zweiten Ausführungsform umfasst die Detektionseinrichtung einen ersten Detektor und einen vom ersten separaten zweiten Detektor, wobei die Ausgangssignale der Detektoren von der Auswerteeinheit getrennt auslesbar sind, und umfasst der Empfänger einen der Sammeloptik im Empfangsstrahl nachgeordneten Facettenspiegel, welcher eine Mehrzahl von in einem Array angeordneten, einzeln oder in Clustern zwischen zumindest einer ersten und einer zweiten Stellung umschaltbaren Spiegelfacetten hat, bevorzugt einen MEMS-Facettenspiegel, d.h. einen Facettenspiegel mit Spiegelfacetten, die jeweils als mikro-elektromechanisches System ("MEMS") aufgebaut sind, und eine Ansteuerung zum Umschalten der Spiegelfacetten, wobei die Spiegelfacetten den Empfangsstrahl in der ersten Stellung auf den ersten Detektor und in der zweiten Stellung auf den zweiten Detektor reflektieren. Beide Detektoren können einfach im Aufbau und besonders empfindlich sein, wodurch auch die Auswerteeinheit besonders einfach ausgeführt sein kann. Die Spiegelfacetten bzw. die Spiegelfacettencluster solcher Facettenspiegel können entweder jeweils vor dem Vermessen oder alternativ (oder zusätzlich) laufend während des Vermessens flexibel an die Erfordernisse angepasst werden, wie ähnlich weiter oben für die Photodioden der ersten Ausführungsform erläutert wurde. Dadurch kann die Vorrichtung auch in dieser zweiten Ausführungsform vorteilhaft mit einer Scaneinheit kombiniert werden, wie weiter unten erläutert wird. Insbesondere im Fall eines MEMS-Facettenspiegels ist auch eine besonders hohe Auflösung beim Trennen des ersten und zweiten Strahlteils des Empfangsstrahls erzielbar.

Günstig ist dabei, wenn ein Abstand zwischen Facettenspiegel und Sammeloptik veränderlich und/oder die Sammeloptik fokussierbar ist, und wenn die Vorrichtung dazu ausgebildet ist, die Bildebene der genannten Grenze zwischen erstem und zweitem Medium auf den Facettenspiegel einzustellen. Ähnlich wie zuvor in Bezug auf die erste Ausführungsform beschrieben, nimmt auf diese Weise jener Teil des Empfangsstrahls, der an der Grenze zwischen erstem und zweitem Medium reflektiert wurde, die geringstmögliche Fläche auf dem Facettenspiegel ein, sodass für das Auslesen des am Ziel reflektierten ersten Strahlteils die größtmögliche Fläche verbleibt, was die Empfindlichkeit des Empfängers gegenüber Reflexionen am Ziel begünstigt.

Besonders günstig ist, wenn die Ansteuerung ferner dazu ausgebildet ist, eine äußere erste Spiegelfacettengruppe getrennt von einer zumindest annähernd kreisförmigen, von der ersten umgebenen zweiten Spiegelfacettengruppe des Facettenspiegels anzusteuern, um die erste Spiegelfacettengruppe in die genannte erste Stellung und die zweite Spiegelfacettengruppe in die genannte zweite Stellung zu schalten. Eine solche Gruppierung trennt die näheren von den entfernteren Reflexionen. Dabei können die Spiegelfacettengruppen aus einzelnen Spiegelfacetten oder aus Spiegelfacettenclustern zusammengesetzt sein. Ferner kann die genannte zweite Spiegelfacettengruppe je nach Erfordernis zentral oder dezentral am Facettenspiegel liegen und insbesondere einzelne Spiegelfacetten oder Spiegelfacettencluster nach Erfordernis wechselnd der ersten oder zweiten Spiegelfacettengruppe zugeordnet werden.

In einer vorteilhaften Variante umfasst die Detektionseinrichtung ferner einen vom ersten und vom zweiten separaten dritten Detektor und ist die Ansteuerung dazu ausgebildet, eine ringförmig zwischen der genannten ersten und der genannten zweiten Spiegelfacettengruppe liegende dritte Spiegelfacettengruppe getrennt von den anderen Spiegelfacettengruppen des Facettenspiegels anzusteuern, um die erste Spiegelfacettengruppe in die genannte erste Stellung, die zweite Spiegelfacettengruppe in die genannte zweite Stellung und die dritte Spiegelfacettengruppe in eine dritte Stellung zu schalten, in welcher die Spiegelfacetten den Empfangsstrahl auf den dritten Detektor reflektieren. Dies erlaubt zusätzlich die Unterscheidung der beiden Anteile des zweiten Strahlteils, nämlich jenes Anteils, der an der Grenze zwischen erstem und zweitem Medium reflektiert wurde, von jenem Anteil, der vom bzw. im zweiten Medium selbst reflektiert wurde.

In einer vorteilhaften dritten Ausführungsform umfasst die Detektionseinrichtung einen ersten Detektor und einen vom ersten separaten zweiten Detektor, wobei die Ausgangssignale der Detektoren von der Auswerteeinheit getrennt auslesbar sind, und umfasst der Empfänger einen im Empfangsstrahl zwischen der Sammeloptik und dem ersten Detektor schräg angeordneten Spiegel, dessen Durchmesser kleiner ist als der von der Sammeloptik gebündelte Empfangsstrahl an der Stelle des Spiegels, wobei der Spiegel den auf ihn auftreffenden Teil des Empfangsstrahls auf den zweiten Detektor reflektiert. Sowohl der erste als auch der zweite Strahlteil kann in hoher Empfindlichkeit von der Detektionseinrichtung empfangen werden; beide Detektoren können einfach im Aufbau und besonders empfindlich sein, wodurch auch die Auswerteeinheit besonders einfach gestaltet sein kann.

Günstig ist dabei wieder, wenn ein Abstand zwischen Spiegel und Sammeloptik veränderlich und/oder die Sammeloptik fokussierbar ist, und wenn die Vorrichtung dazu ausgebildet ist, die Bildebene der genannten Grenze zwischen erstem und zweitem Medium auf den Spiegel einzustellen. Dadurch kann der Spiegel klein gehalten werden, sodass für das Auslesen des am Ziel reflektierten ersten Strahlteils des Empfangsstrahls die größtmögliche Querschnittsfläche verbleibt und zum ersten Detektor gelangt, was die Empfindlichkeit des Empfängers gegenüber Reflexionen am Ziel begünstigt.

Vorteilhaft ist ferner, wenn der Spiegel quer zur Achse des Empfangsstrahls zwischen der Sammeloptik und dem ersten Detektor verschieblich ist. Auf diese Weise kann auch in dieser Ausführungsform der Spiegel entweder vor dem Vermessen oder alternativ (oder zusätzlich) laufend während des Vermessens flexibel je nach Erfordernis verschoben werden. Dadurch kann die Vorrichtung auch in dieser Ausführungsform mit einer Scaneinheit vorteilhaft kombiniert werden, wie weiter unten erläutert wird.

Wenn wie zuvor die Detektionseinrichtung den ersten Detektor und den davon separaten zweiten Detektor umfasst, deren jeweilige Ausgangssignale von der Auswerteeinheit getrennt auslesbar sind, kann der Empfänger alternativ zum vorgenannten Spiegel einen Ringspiegel umfassen, der im Empfangsstrahl zwischen der Sammeloptik und dem zweiten Detektor schräg angeordnet und dessen Innendurchmesser kleiner ist als der von der Sammeloptik gebündelte Empfangsstrahl an der Stelle des Ringspiegels und größer als der zweite Strahlteil an dieser Stelle, wobei der Ringspiegel den auf ihn auftreffenden Teil des Empfangsstrahls auf den ersten Detektor reflektiert. Erster und zweiter Detektor sind in dieser Variante im Vergleich zur vorgenannten dritten Ausführungsform gleichsam vertauscht, sodass der zweite Strahlteil den Ringspiegel passiert, wogegen der erste Strahlteil vom Ringspiegel auf den ersten Detektor reflektiert wird. Alle Vorteile der genannten dritten Ausführungsform bleiben erhalten.

Dabei ist günstig, wenn ein Abstand zwischen Ringspiegel und Sammeloptik veränderlich und/oder die Sammeloptik fokussierbar und die Vorrichtung dazu ausgebildet ist, die Bildebene der genannten Grenze zwischen erstem und zweitem Medium auf den Ringspiegel einzustellen. So kann der Innendurchmesser des Ringspiegels klein gehalten werden, sodass für das Auslesen des am Ziel reflektierten ersten Strahlteils des Empfangsstrahls die größtmögliche Spiegelfläche verbleibt und von diesem auf den ersten Detektor reflektiert wird, was die Empfindlichkeit des Empfängers gegenüber Reflexionen am Ziel begünstigt.

Vorteilhaft ist ferner, wenn der Ringspiegel quer zur Achse des Empfangsstrahls zwischen der Sammeloptik und dem zweiten Detektor verschieblich ist. Dadurch kann die Vorrichtung auch in dieser Variante mit einer Scaneinheit vorteilhaft kombiniert werden, wie weiter unten erläutert wird.

Um die Vorrichtung an weitere Erfordernisse, z.B. die - erwartete oder gemessene - Zielentfernung, die - erwartete oder gemessene - Entfernung der Grenze zwischen erstem und zweitem Medium, an die Augensicherheit, die Flughöhe über Grund od.dgl., anpassen zu können, ist in allen Ausführungsformen vorteilhaft, wenn die Vorrichtung ferner dazu ausgebildet ist, die Divergenz des vom Lasersender ausgesendeten Laserstrahls zu steuern. In diesem Fall können die Photodiodencluster bzw. die Spiegelfacettencluster an die jeweilige Divergenz des ausgesendeten Laserstrahls dynamisch angepasst werden, um möglichst hohe Empfindlichkeit der Detektionseinrichtung zu erzielen.

Günstig ist ferner, wenn die Vorrichtung über eine gemeinsame Scaneinheit, z.B. einen um eine Achse rotierenden oder schwingenden Spiegel oder eine um eine Achse rotierende oder schwingende Prismenscheibe, zum Scannen des Sendestrahls und des Sichtfeldes des Empfängers über die Umgebung verfügt. Auf diese Weise kann eine große Fläche der Umgebung in kurzer Zeit vermessen werden.

Zur Erzielung einer besonders hohen Flexibilität im Aufbau und im Betrieb ist vorteilhaft, wenn die Vorrichtung alternativ über eine erste Scaneinheit zum Scannen des Sendestrahls und über eine von der ersten separate zweite Scaneinheit zum Scannen des Sichtfeldes des Empfängers über die Umgebung verfügt. Der Sendestrahl und das Sichtfeld können dadurch beliebig zueinander ausgerichtet werden; insbesondere können die Scanbewegungen der beiden Scaneinheiten derart aufeinander abgestimmt werden, dass ein sogenannter Lag-Winkel infolge der Laufzeit des Sende- und des Empfangsstrahls dynamisch kompensiert wird.

Die Erfindung wird nachstehend anhand von in den beigeschlossenen Zeichnungen dargestellten Ausführungsbeispielen näher erläutert. In den Zeichnungen zeigen:
die Fig. 1a und 1b eine erste beispielhafte Ausführungsform einer Vorrichtung gemäß der Erfindung beim Vermessen einer Umgebung in einer schematischen Seitenansicht (Fig. 1a) und eine Detektionseinrichtung eines Empfängers der Vorrichtung in gegenüber Fig. 1a vergrößerter Draufsicht (Fig. 1b);
die Fig. 2a und 2b zwei alternative Ausführungsbeispiele des Empfängers der Vorrichtung von Fig. 1a jeweils in einer schematischen Seitenansicht; und
Fig. 3 einen Ausschnitt einer Auswerteeinheit der Vorrichtung der Fig. 1a in einem Blockschaltbild.

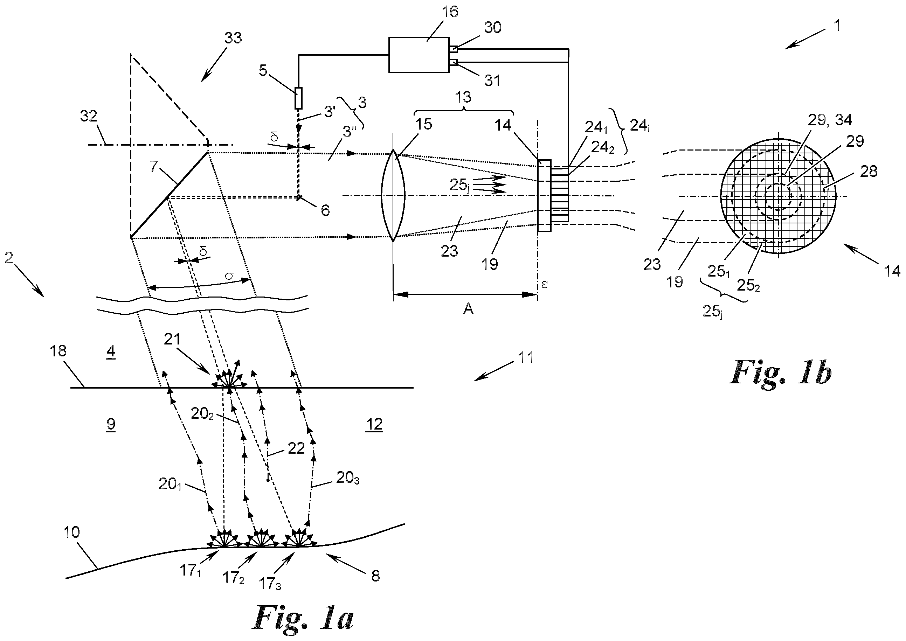

Fig. 1 zeigt eine erste beispielhafte Ausführungsform einer Vorrichtung 1 zum Vermessen einer Umgebung 2 durch Laufzeitmessung eines daran reflektierten Laserstrahls 3. Die Vorrichtung 1 ist dabei von einem ersten Medium 4 (hier: von Luft) umgeben, in welchem der Laserstrahl 3 nur sehr wenig - oder ideal: gar nicht - gestreut wird. Zum Aussenden des Laserstrahls 3 umfasst die Vorrichtung 1 einen Lasersender 5, welcher den Laserstrahl 3 über einen optionalen Einkoppelspiegel 6 und einen ebenfalls optionalen Ablenkspiegel 7 auf ein Ziel 8 in der Umgebung 2 als Sendestrahl 3' aussendet. Für eine größere Reichweite der Messung soll die Divergenz δ des Lasersenders 5 bzw. seines Sendestrahls 3' im Allgemeinen möglichst gering sein, wozu z.B. Kollimatoren verwendet werden. Der Kollimator kann eine Linse od.dgl., bei entsprechender Wölbung, der Einkoppelspiegel 6 sein. Optional kann die Vorrichtung 1 dazu ausgebildet sein, die Divergenz δ des vom Lasersender 5 ausgesendeten Laserstrahls 3 zu steuern und so an unterschiedliche Erfordernisse anzupassen. Dazu kann die Vorrichtung 1 z.B. einen entsprechend verstellbaren Kollimator für den Lasersender 3 umfassen.

Dem Ziel 8 ist ein stärker streuendes zweites Medium 9 vorgelagert; im dargestellten Beispiel ist das Ziel 8 der Umgebung 2 der Boden 10 eines Gewässers 11, z.B. eines Flusses, Sees oder Meeres. Das zweite Medium 9 ist in diesem Beispiel das Wasser 12 des Gewässers 11, welches wesentlich stärker streut als die die Vorrichtung 1 umgebende Luft 4.

Das Ziel 8 ist im Allgemeinen ein Bereich der Oberfläche der zu vermessenden Umgebung 2 und ist selbst nicht zwingend vollständig im zweiten Medium 9 eingebettet wie der Gewässerboden 10 des gezeigten Beispiels. Anstelle am Gewässerboden 10 könnte das Ziel 8 z.B. an einem Berghang, einem Steinbruch, einer Gebäudezeile oder an bzw. in einem Bergwerk od.dgl. liegen (nicht dargestellt), welcher/welche/welches von Nebel, Dunst, Rauch und/oder Wolken verschleiert ist, ohne davon völlig verdeckt zu sein; oder das Ziel 8 liegt in einer Landschaft, welche von einer luftgestützten Vorrichtung 1 vermessen wird und über welcher ebenso ein Nebel-, Dunst-, Rauch- und/oder Wolkenschleier liegt.

Die Vorrichtung 1 umfasst ferner einen Empfänger 13, welcher eine Detektionseinrichtung 14 hat, die (hier: über den Ablenkspiegel 7) den an der Umgebung 2 in Richtung Empfänger 13 reflektierten Sendestrahl 3' als Empfangsstrahl 3" empfängt. Der Empfänger 13 hat ferner eine Sammeloptik 15, z.B. einen Hohlspiegel, ein Objektiv, oder hier eine Sammellinse, welche der Detektionseinrichtung 14 in Richtung des Empfangsstrahls 3" vorgelagert ist und den Empfangsstrahl 3" auf die Detektionseinrichtung 14 bündelt. Insgesamt hat der Empfänger 13 ein Sichtfeld σ, das größer ist als die Divergenz δ des vom Lasersender 5 ausgesandten Laserstrahls 3 beim Aussenden.

Überdies umfasst die Vorrichtung 1 eine Auswerteeinheit 16, die mit dem Lasersender 5 und dem Empfänger 13 verbunden ist und aus der Laufzeit des Laserstrahls 3 vom Lasersender 5 zum Ziel 8 und von diesem zurück zum Empfänger 13 die Entfernung des Ziels 8 von der Vorrichtung 1 ermittelt, wie dies aus dem Stand der Technik bekannt ist. Optional erzeugt die Vorrichtung 1 oder ein nachgelagerter Rechner aus den für mehrere Ziele 8 ermittelten Laufzeiten - in Kenntnis der Position und Lage der Vorrichtung 1 und der jeweiligen Sendestrahlrichtung - ein Modell der Umgebung 2, z.B. eine "3D-Punktwolke".

Wie im Beispiel der Fig. 1 gezeigt, verbreitert sich der Sendestrahl 3' im stärker streuenden zweiten Medium 9 wesentlich stärker als im ersten Medium 4. Am Ziel 8 wird der bis dorthin vordringende Teil des Sendestrahls 3' im Allgemeinen diffus reflektiert, wie in Fig. 1a drei beispielhafte Strahlenfächer 17₁, 17₂ und 17₃ versinnbildlichen. Nur ein kleiner Teil des am Ziel 8 reflektierten Laserstrahls 3 gelangt von dort unter erneuter Streuung durch das zweite Medium 9 hindurch zurück zur Grenze 18 zwischen erstem und zweitem Medium 4, 9 im Bereich des Sichtfeldes σ des Empfängers 13 und wird dort in Richtung des Empfängers 13 gebrochen, sodass dieser Teil zum Empfänger 13 gelangen kann. Dieser Teil bildet einen ersten Strahlteil 19 des Empfangsstrahls 3" und ist in Fig. 1a durch drei beispielhafte, im zweiten Medium 9 mehrfach gestreute Strahlpfade 20₁, 20₂ und 20₃ versinnbildlicht.

Ein - oft wesentlich größerer - Teil des Sendestrahls 3' wurde bereits zuvor an der genannten Grenze 18 zwischen erstem und zweitem Medium 4, 9 reflektiert. An dieser Stelle hat der Sendestrahl 3', wie in Fig. 1a dargestellt, einen wesentlich kleineren Durchmesser als das Sichtfeld σ des Empfängers 13. Auch hier wird der Laserstrahl 3 im Allgemeinen in mehrere Richtungen reflektiert, wie ein weiterer Strahlenfächer 21 versinnbildlicht. Dieser Teil des reflektierten Laserstrahls 3 und/oder ein möglicher weiterer, welcher vom (bzw. im) zweiten Medium 9 selbst reflektiert wird, wie ein weiterer Strahlpfad 22 in Fig. 1a versinnbildlicht, bilden zusammen einen zweiten Strahlteil 23 des Empfangsstrahls 3", soweit dieser zum Empfänger 13 gelangt.

Der zweite Strahlteil 23 des Empfangsstrahls 3" trifft aufgrund seiner im Vergleich zum ersten Strahlteil 19 kürzeren Laufzeit früher am Empfänger 13 und seiner Detektionseinrichtung 14 ein. Ferner hat der zweite Strahlteil 23 oft deutlich höhere Leistung als der erste Strahlteil 19. Der Empfänger 13 ist deshalb dazu ausgebildet, den ersten Strahlteil 19 und den zweiten Strahlteil 23 voneinander zu trennen, wie weiter unten näher erläutert wird, um in der Detektionseinrichtung 14 aus den getrennten ersten und zweiten Strahlteilen 19, 23 jeweils gesonderte Ausgangsignale 24₁, 24₂, ..., allgemein 24ᵢ, zu erzeugen. Die Ausgangssignale 24ᵢ können jeweils ein oder mehrere Signal/e pro Strahlteil 19,23 sein. Die Auswerteeinheit 16 ist dazu ausgebildet, die gesonderten Ausgangssignale 24ᵢ der Detektionseinrichtung 14 getrennt auszulesen und folglich auch die Laufzeiten für den ersten und zweiten Strahlteil 19, 23 getrennt zu ermitteln. Die für den ersten Strahlteil 13 ermittelte Laufzeit ergibt nach bekanntem Zusammenhang mit der Lichtgeschwindigkeit c (in Abhängigkeit vom jeweiligen Medium) die Zielentfernung, und die für den zweiten Strahlteil 23 - nach demselben Prinzip - ermittelte Laufzeit kann z.B. zur Steuerung des Empfängers 13 genutzt werden, wie weiter unten anhand der Fig. 1b beispielhaft näher erläutert wird.

In einer ersten Ausführungsform gemäß den Fig. 1a und 1b ist die Detektionseinrichtung 14 ein Array von Photodioden 25₁, 25₂, ..., allgemein 25ⱼ. Die Photodioden 25ⱼ sind z.B. Avalanche-Dioden ("Avalanche Photo Diodes", "APD") oder andere empfindliche Photosensoren, und die Arrays sind z.B. "Silicon Photo Multiplier" ("SiPM") Arrays od.dgl. Die Auswerteeinheit 16 ist in diesem Fall dazu ausgebildet, die Ausgangssignale 24ᵢ der Photodioden 25ⱼ entweder einzeln oder nach Clustern aus jeweils mehreren Photodioden 25ⱼ getrennt auszulesen. Das Clustern der Photodioden 25ⱼ erfolgt entweder durch - optional: variable - Zuordnung in der Auswerteeinheit 16, d.h. dass entweder die Auswerteeinheit 16 mit jeder Photodiode 25ⱼ einzeln verbunden ist und die Ausganssignale 24ᵢ aller Photodioden 25ⱼ separat ausliest und hinterher Cluster aus jeweils mehreren Photodioden 25ⱼ bzw. deren Ausgangssignalen 24ᵢ bildet, oder die Cluster aus Photodioden 25ⱼ sind bereits fix verdrahtet, sodass die Auswerteeinheit 16 jeweils mit jedem einzelnen Photodiodencluster verbunden ist und von jedem Photodiodencluster ein einziges (Sammel-)Ausgangssignal 24ᵢ ausliest.

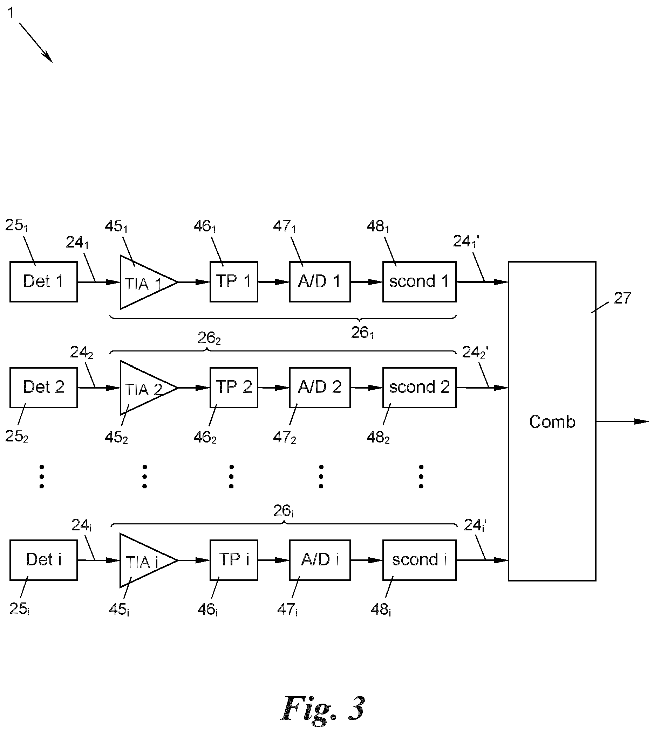

In einer optionalen Variante dieser Ausführungsform umfasst die Auswerteeinheit 16 für jede der Photodioden 25ⱼ oder Photodiodencluster eine eigene Konditionierschaltung 26₁, 26₂, ..., allgemein 26ᵢ (Fig. 3), welche die Ausgangssignale 24ᵢ der jeweiligen Photodioden 25ⱼ bzw. Photodiodencluster konditioniert, d.h. aufbereitet, und ferner einen Kombiniererbaustein 27 (Fig. 3), welche die konditionierten Ausgangssignale 24ᵢ' der Konditionierschaltungen 26ᵢ variabel kombiniert, wie weiter unten unter Bezugnahme auf Fig. 3 näher erläutert wird.

Es versteht sich, dass die Photodioden 25ⱼ (oder die Photodiodencluster) ferner beliebig, z.B. in Segmenten, Rastern od.dgl., zu Gruppen zusammengefasst werden können und in der Folge das Ausgangssignal 24ᵢ jeder Gruppe ausgelesen und ausgewertet oder die Ausgangssignale 24ᵢ aller Photodioden 25ⱼ jeder Gruppe getrennt ausgelesen und nach dem Auslesen von der Auswerteeinheit 16 gemeinsam ausgewertet werden.

In einer optionalen Variante gemäß Fig. 1b werden die (hier: im quadratischen Raster angeordneten) Photodioden 25ⱼ oder Photodiodencluster in eine äußere erste Photodiodengruppe 28 und eine zumindest annähernd kreisförmige, von der ersten umgebene zweite Photodiodengruppe 29 des Arrays unterteilt; exakte Kreisform wird aufgrund der Array-Anordnung der Photodioden 25ⱼ meist nicht erzielbar sein, ferner könnte die zweite Photodiodengruppe 29 bewusst nicht-kreisförmig, insbesondere oval, sein. Die Auswerteeinheit 16 ist in diesem Fall dazu ausgebildet, die Ausgangssignale 24ᵢ der ersten Photodiodengruppe 28 getrennt von den Ausgangssignalen 24ᵢ der zweiten Photodiodengruppe 29 des Arrays auszulesen, wie durch die beiden separaten Anschlüsse 30, 31 zum Auslesen jeweils eines Gruppen-Ausgangssignals 24ᵢ oder aller einzelnen Photodioden-Ausgangssignale 24ᵢ in Fig. 1a versinnbildlicht ist.

Aufgrund der im Vergleich zum Ziel 8 geringeren Entfernung der Grenze 18 zwischen erstem und zweitem Medium 9, an welcher der genannte zweite Strahlteil 23 des Empfangsstrahls 3" reflektiert wurde und aufgrund der geringeren Divergenz δ des Sendestrahls 3' an dieser Grenze 18, wird der zweite Strahlteil 23 von der Sammeloptik 15 stärker gebündelt und trifft im Bereich der zweiten Photodiodengruppe 29 (in dieser Variante: im mittleren strichlierten Kreis in Fig. 1b) auf die Detektionseinrichtung 14, wogegen der erste Strahlteil 19 im Bereich der ersten Photodiodengruppe 28 auf die Detektionseinrichtung 14 trifft.

Es versteht sich, dass ein geringer Anteil des ersten Strahlteils 19 auch auf den Bereich der zweiten Photodiodengruppe 29 auftrifft, jedoch trifft kein Anteil des zweiten Strahlteils 23 auf den Bereich der ersten Photodiodengruppe 28, wodurch die beiden Strahlteile 19, 23 zumindest weitestgehend voneinander getrennt werden. Dasselbe Prinzip gilt naturgemäß auch ohne Gruppierung der Photodioden 25ⱼ bzw. Photodiodencluster.

Es sei angemerkt, dass die Detektionseinrichtung 14 den zweiten Strahlteil 23 nicht nur früher empfängt, sondern dieser oft auch wesentlich stärker ist als der erste Strahlteil 19, sodass die zweite Photodiodengruppe 29 beim Eintreffen des ersten Strahlteils 23 im Allgemeinen noch unter der Wirkung einer Blendung durch den zuvor eingetroffenen zweiten Strahlteil steht und für den einfallenden ersten Strahlteil 19 kein oder allenfalls ein sehr geringes Ausgangssignal 24ᵢ erzeugt, welches, wenn gewünscht, auch gänzlich unterdrückt werden kann.

Optional verfügt die Vorrichtung 1 über eine um eine Achse 32 rotier- oder schwenkbare Scaneinheit 33, welche den Sendestrahl 3' und optional zugleich das Sichtfeld σ des Empfängers 13 über die Umgebung 2 scannt. Im dargestellten Beispiel ist die Scaneinheit 33 ein rotierender Pyramidenstumpf, dessen Mantelflächen durch jeweils ein Segment des Ablenkspiegels 7 gebildet sind. Andere Scaneinheiten 33, z.B. ein zylindrisches Spiegelrad, ein Schwingspiegel, eine rotierende oder schwingende Prismenscheibe od.dgl. können alternativ oder zusätzlich verwendet werden. Auch könnte alternativ zur dargestellten gemeinsamen Scaneinheit 33 die Vorrichtung 1 über eine erste Scaneinheit zum Scannen des Sendestrahls 3' und über eine von der ersten separate zweite Scaneinheit zum Scannen des Sichtfeldes σ des Empfängers 13 über die Umgebung 2 verfügen (nicht dargestellt). Ferner könnte anstelle des in Fig. 1a dargestellten Einkoppelspiegels 6, welcher optional teildurchlässig für den Empfangsstrahl 3" ist, der Lasersender 5 den Sendestrahl 3' außerhalb des Sichtfelds σ auf den Ablenkspiegel 7 richten, sodass Sende- und Empfangsstrahl 3', 3" an dieser Stelle nicht koaxial verlaufen. In einer weiteren Alternative könnten Sende- und Empfangsstrahlen 3', 3" auch völlig unabhängig voneinander, d.h. ohne gemeinsamen Ablenkspiegel 7 geführt sein.

Die von der genannten ersten Photodiodengruppe 28 umgebene zweite Photodiodengruppe 29 liegt nicht zwingend stets zentral am Array der Photodioden 25ⱼ. Insbesondere kann, z.B. wenn die Vorrichtung 1 über die Scaneinheit 33 verfügt, die zweite Photodiodengruppe 29 dynamisch einem erwarteten oder ermittelten Bewegungsverlauf des zweiten Strahlteils 23 des Empfangsstrahls 3" über das Array von Photodioden 25ⱼ nachgeführt werden.

In einer weiteren optionalen Ausführungsvariante ist ferner ringförmig zwischen der genannten ersten und der genannten zweiten Photodiodengruppe 28, 29 eine dritte Photodiodengruppe 34 angeordnet. Die Auswerteeinheit 16 ist in diesem Fall dazu ausgebildet, die Ausgangssignale 24ᵢ der ringförmigen dritten Photodiodengruppe 34 getrennt von jenen der beiden anderen Photodiodengruppen 28, 29 des Arrays auszulesen. Auch diese Variante ist in Fig. 1b dargestellt, indem die zweite Photodiodengruppe 29 den inneren strichlierten Kreis bezeichnet, auf welchen die Reflexion an der Grenze 18 zwischen erstem und zweitem Medium 4, 9 gebündelt wird, und im Gegensatz zur zuvor beschriebenen Variante mit nur zwei Photodiodengruppen 28, 29 der mittlere der strichlierten Kreise in Fig. 1b nun die ringförmige dritte Photodiodengruppe 34 umgrenzt, auf welche Reflexionen aus dem zweiten Medium 9 gebündelt werden (z.B. jene aus dem Strahlpfad 22).

Um die genannte Trennung des ersten und zweiten Strahlteils 19, 23 des Empfangsstrahls 3" zu erleichtern, ist optional der Abstand A zwischen der Detektionseinrichtung 14 und der Sammeloptik 15 veränderlich oder ist die Sammeloptik 15 fokussierbar oder beides. Die Vorrichtung 1 ist in diesem Fall dazu ausgebildet, die Bildebene ε, welche die genannte Grenze 18 zwischen erstem und zweitem Medium 4, 9 abbildet, auf die Detektionseinrichtung 14 (hier: das Array von Photodioden 25ⱼ) einzustellen. Dazu kann die ermittelte Laufzeit des zweiten Strahlteils 23 herangezogen werden kann, um die Entfernung von der genannten Grenze 18 zu ermitteln. Dadurch wird der zweite Strahlteil 23 des Empfangsstrahls 3" möglichst scharf und klein auf die Detektionseinrichtung 14 gebündelt.

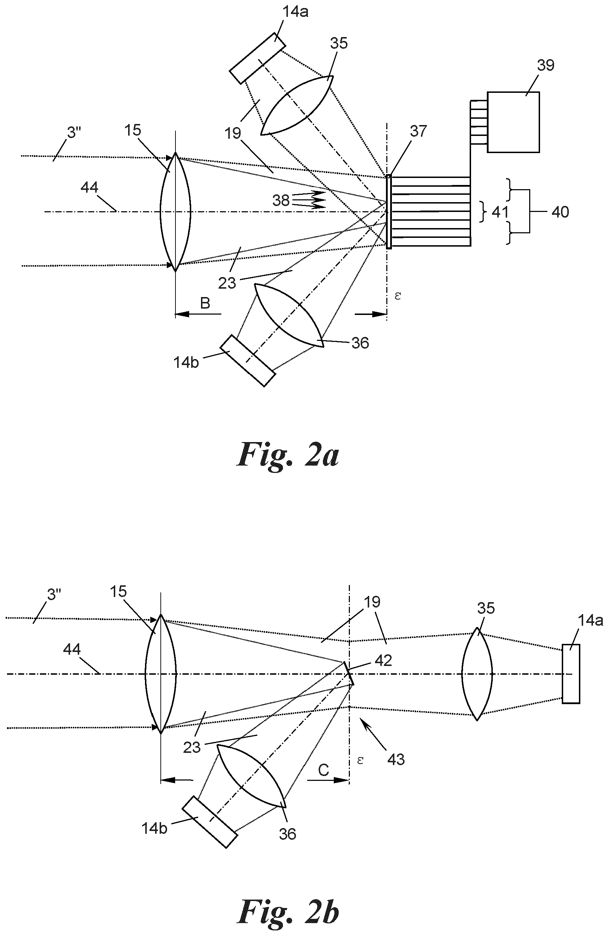

In einer alternativen zweiten Ausführungsform der Vorrichtung 1 gemäß Fig. 2a und einer weiteren alternativen dritten Ausführungsform gemäß Fig. 2b hat jeweils die Detektionseinrichtung 14 einen ersten Detektor 14a und einen vom ersten separaten zweiten Detektor 14b. Die beiden Detektoren 14a, 14b sind entweder jeweils wieder durch ein Array von - optional geclusterten - Photodioden 25ⱼ gebildet oder durch jeweils eine einzige Photodiode 25ⱼ. Jedenfalls sind wieder die - zumindest zwei - Ausgangssignale 24ᵢ der beiden Detektoren 14a, 14b von der in den Fig. 2a und 2b nicht erneut dargestellten Auswerteeinheit 16 getrennt auslesbar, wie zuvor für die Photodioden 25ⱼ oder Photodiodencluster der ersten Ausführungsform erläutert, d.h. jene des ersten Detektors 14a getrennt von jenen des zweiten Detektors 14b.

In den Beispielen der Fig. 2a und 2b umfasst der Empfänger 13 zusätzlich zur Sammeloptik 15 zwei Sammellinsen (oder alternativ ähnlich wirkende Sammeloptiken) 35, 36, von welchen jeweils eine dem ersten und die andere dem zweiten Detektor 14a, 14b unmittelbar vorgeordnet ist, um die voneinander getrennten ersten und zweiten Strahlteile 19, 23 auf den jeweiligen Detektor 14a, 14b zu bündeln. Alternativ könnten die beiden Detektoren 14a, 14b entsprechend größer sein.

In der in Fig. 2a gezeigten zweiten Ausführungsform der Vorrichtung 1 hat der Empfänger 13 einen der Sammeloptik 15 im Empfangsstrahl 3" nachgeordneten Facettenspiegel 37 mit einer Mehrzahl von Spiegelfacetten 38, die in einem Array angeordnet und einzeln oder in Clustern zwischen zumindest einer ersten und einer zweiten Stellung umschaltbar sind. Der Facettenspiegel 37 kann dabei beliebiger Bauart sein, beispielsweise ist jede Spiegelfacette 38 ein mikro-elektromechanisches System ("MEMS"), d.h. es handelt sich um einen MEMS-Facettenspiegel 37. In der zweiten Ausführungsform umfasst die Detektionseinrichtung 14 ferner eine Ansteuerung 39 zum Umschalten der Spiegelfacetten 38 des Facettenspiegels 37.

Die Spiegelfacetten 38 reflektieren den Empfangsstrahl 3" in ihrer ersten Stellung auf den ersten Detektor 14a und in der zweiten Stellung auf den zweiten Detektor 14b. Mithilfe des Facettenspiegels 37 und der Ansteuerung 39 für die Spiegelfacetten 38 trennt der Empfänger die ersten und zweiten Strahlteile 19, 23 des Empfangsstrahls 3" voneinander, und die in den ersten und zweiten Detektor 14a, 14b geteilte Detektionseinrichtung 14 erzeugt aus den getrennten ersten und zweiten Strahlteilen 19, 23 gesonderte Ausgangssignale 24ᵢ, welche von der Auswerteeinheit 16 getrennt ausgelesen werden.

Es versteht sich, dass auch in der zweiten Ausführungsform optional entweder ein Abstand B (hier: zwischen dem Facettenspiegel 37 und der Sammeloptik 15) veränderlich und/oder die Sammeloptik 15 fokussierbar sein kann, wobei hier die Vorrichtung 1 dazu ausgebildet ist, die Bildebene ε der genannten Grenze 18 zwischen ersten und zweiten Medium 4, 9 auf den Facettenspiegel 37 einzustellen.

Wie ähnlich weiter oben in Bezug auf Fig. 1b und die Photodioden 25j oder Photodiodencluster der ersten Ausführungsform beschrieben, ist die Ansteuerung 39 der zweiten Ausführungsform optional dazu ausgebildet, eine äußere erste Spiegelfacettengruppe 40 getrennt von einer zumindest annähernd kreisförmigen, von der ersten umgebenen zweiten Spiegelfacettengruppe 41 des Facettenspiegels 37 anzusteuern. Dadurch kann die Ansteuerung 39 die erste Spiegelfacettengruppe 40 in die genannte erste Stellung und die zweite Spiegelfacettengruppe 41 in die genannte zweite Stellung schalten, wodurch der erste Strahlteil 19 auf den ersten Detektor 14a und der zweite Strahlteil 23 das Empfangsstrahls 3" auf den zweiten Detektor 14b reflektiert wird. Wieder ist die Zuordnung der einzelnen Spiegelfacetten 38 des Facettenspiegels 37 zur ersten oder zur zweiten Spiegelfacettengruppe 40, 41 fest oder - bevorzugt - variabel, wobei die Ansteuerung 39 je nach Erfordernis Spiegelfacetten 38 der ersten oder der zweiten Spiegelfacettengruppe 40, 41 zuordnen kann und einem Bewegungsverlauf des zweiten Strahlteils 23 über den Facettenspiegel 37 nachführen kann, z.B. wenn die Vorrichtung 1 über die optionale Scaneinheit 33 verfügt. Auch sind aus den für die erste Ausführungsform genannten Gründen Abweichungen von der Kreisform möglich.

Es versteht sich, dass - in Analogie zu der zuvor unter Bezugnahme auf Fig. 1b für die erste Ausführungsform beschriebenen Variante - in der zweiten Ausführungsform die Detektionseinrichtung 14 optional einen vom ersten und vom zweiten Detektor 14a, 14b separaten dritten Detektor (nicht dargestellt) umfassen kann und in diesem Fall die Ansteuerung 39 dazu ausgebildet ist, eine dritte Spiegelfacettengruppe, die ringförmig zwischen der genannten ersten und der genannten zweiten Spiegelfacettengruppe 40, 41 liegt, getrennt von den anderen Spiegelfacettengruppen 40,41 des Facettenspiegels 37 anzusteuern. Die Ansteuerung 39 schaltet dabei die erste Spiegelfacettengruppe 40 in die genannte erste Stellung, die zweite Spiegelfacettengruppe 41 in die genannte zweite Stellung und die dritte Spiegelfacettengruppe in eine dritte Stellung, in welcher die Spiegelfacetten 38 den Empfangsstrahl 3" auf den dritten Detektor reflektieren.

Es versteht sich, dass in dem optionalen Fall, dass der Facettenspiegel 37 - analog zum Array von Photodioden 25j der ersten Ausführungsform - in Cluster aus jeweils mehreren Spiegelfacetten 38 unterteilt ist, die Cluster jeweils getrennt angesteuert und so einzelne Cluster je nach Erfordernis wechselnd der ersten, der zweiten oder einer weiteren Spiegelfacettengruppe 40, 41 zugeordnet werden können.

Anstelle eines einzigen Facettenspiegels 37, dessen Spiegelfacetten 38 drei (oder mehr) verschiedene Stellungen einnehmen können, um den Empfangsstrahl 3" auf drei (oder mehr) Detektoren 14a, 14b zu reflektieren, könnten zwei (oder mehr) Facettenspiegel mit jeweils zwischen zwei Stellungen umschaltbaren Spiegelfacetten eingesetzt werden, von welchen die Spiegelfacetten des einen den Empfangsstrahl 3" in ihrer einen Stellung auf z.B. den ersten Detektor 14a und in ihrer anderen Stellung auf den anderen Facettenspiegel reflektieren, und die Spiegelfacetten des anderen Facettenspiegels den vom einen Facettenspiegel auf sie reflektierten Teil des Empfangsstrahls 3" in ihrer einen Stellung auf z.B. den zweiten Detektor 14b und in ihrer anderen Stellung auf den dritten Detektor reflektieren, etc. (nicht dargestellt). Wieder können, wie zuvor unter Bezugnahme auf die Fig. 2a und 2b erläutert wurde, optional Sammellinsen oder andere Sammeloptiken 35, 36 jeweils zwischengeschaltet sein.

In der in Fig. 2b gezeigten dritten Ausführungsform hat der Empfänger 13 hingegen einen Spiegel 42, der zwischen der Sammeloptik 15 und dem ersten Detektor 14a schräg im Empfangsstrahl 3" angeordnet ist. Der Spiegel 42 hat einen Durchmesser d, welcher kleiner ist als der von der Sammeloptik 15 gebündelte Empfangsstrahl 3" an der Stelle des Spiegels 42. Durch seine Schrägstellung reflektiert der Spiegel 42 den auf ihn auftreffenden Teil des Empfangsstrahls 3" auf den zweiten Detektor 14b der Detektionseinrichtung 14. Der verbleibende Teil des Empfangsstrahls 3" passiert den Spiegel 42, um auf den ersten Detektor 14a zu treffen. Der Durchmesser d des Spiegels 42 ist an jenen des zweiten Stahlteils 23 des Empfangsstrahls 3" in diesem Bereich angepasst, d.h. gleich groß oder geringfügig größer, um den vollständigen zweiten Strahlteil 23 auf den zweiten Detektor 14b zu reflektieren, sodass auf den ersten Detektor 14a keine Bestandteile des zweiten sondern ausschließlich solche des ersten Strahlteils 19 des Empfangsstrahls 3" treffen.

In einer dazu alternativen, nicht dargestellten Variante, welche ansonsten der vorgenannten dritten Ausführungsform entspricht, umfasst der Empfänger 13 einen im Empfangsstrahl 3" zwischen der Sammeloptik 15 und dem zweiten Detektor 14b schräg angeordneten Ringspiegel, dessen Innendurchmesser kleiner ist als der von der Sammeloptik 15 gebündelte Empfangsstrahl 3" an der Stelle des Ringspiegels und größer ist als der zweite Strahlteil 23 an dieser Stelle. Der verbleibende Teil des Empfangsstrahls 3" passiert den Ringspiegel, um auf den zweiten Detektor 14b zu treffen. Erster und zweiter Detektor 14a, 14b sind in dieser Variante gegenüber der Darstellung in Fig. 2b vertauscht und der Ringspiegel tritt an die Stelle des Spiegels 42 aus Fig. 2b. Dabei reflektiert der Ringspiegel den auf ihn auftreffenden Teil des Empfangsstrahls 3" auf den ersten Detektor 14a; der verbleibende Teil des Empfangsstrahls 3" passiert den Ringspiegel, um auf den zweiten Detektor 14b zu treffen.

Ist optional, wie zuvor analog für die erste Ausführungsform näher erläutert, ein Abstand C zwischen (hier) dem Spiegel 42 bzw. dem Ringspiegel und der Sammeloptik 15 veränderlich und/oder ist die Sammeloptik 15 fokussierbar, dann kann die Vorrichtung 1 dazu ausgebildet sein, die Bildebene ε der genannten Grenze 18 zwischen erstem und zweitem Medium 4, 9 (in Fig. 2a nicht dargestellt) auf den Spiegel 42 einzustellen, wie in Fig. 2a gezeigt. Etwa in diesem Bereich weist der erste Strahlteil 19 des Empfangsstrahls 3" eine Engstelle 43 ("beam waist") auf. Der zweite Strahlteil 23 des Empfangsstrahls 3" ist so in der Bildebene ε scharf abgebildet und deshalb besonders klein.

Um auch verschiedene, insbesondere veränderliche Lagen des zweiten Strahlteils 23 im Empfangsstrahl 3" berücksichtigen zu können, z.B. wenn die Vorrichtung 1 eine Scaneinheit 33 umfasst, kann der Spiegel 42 optional quer zur Achse 44 des Empfangsstrahls 3" zwischen der Sammeloptik 15 und dem ersten Detektor 14a verschieblich sein bzw. kann der Ringspiegel optional quer zur Achse 44 des Empfangsstrahls 3" zwischen der Sammeloptik 15 und dem zweiten Detektor 14b verschieblich sein.

Ferner könnten in Analogie zum vorgenannten dritten Facettenspiegel der Ausführungsform nach Fig. 2a auch in der Ausführungsform der Fig. 2b drei (oder mehr) Detektoren 14a, 14b mit zwei (oder mehr) Spiegeln bzw. Ringspiegeln eingesetzt werden, welche die verschiedenen Teile des Empfangsstrahls 3" entsprechend auf die drei (oder mehr) Detektoren 14a, 14b reflektieren, wobei wieder jeweilige Sammeloptiken 35, 36 zwischengeschaltet sein können.

Wie weiter oben unter Bezugnahme auf Fig. 1a erwähnt, zeigt Fig. 3 eine Variante, in welcher die Auswerteeinheit 16 mehrere Konditionierschaltungen 26ᵢ zum Konditionieren der Ausgangssignale 24ᵢ der Photodioden 25ⱼ oder Photodiodencluster und einen Kombiniererbaustein 27 umfasst. Die Photodioden 25ⱼ und ihre Ausgangssignale 24ᵢ können jene des beschriebenen Arrays von Photodioden 25ⱼ sein oder die jeweils eine oder mehreren Photodioden 25ⱼ der beiden separaten Detektoren 14a, 14b bzw. des optionalen dritten Detektors der zweiten Anführungsform. Ebenso können die Ausgangssignale 24ᵢ jene einzelner Photodioden 25ⱼ oder jene der jeweiligen Photodiodencluster sein.

Im Beispiel der Fig. 3 umfasst jede Konditionierschaltung 26ᵢ, um aus einem Ausgangssignal 24ᵢ ein konditioniertes Ausgangssignal 24ᵢ' zu erzeugen, eines oder mehrere der folgenden Bauelemente: einen Verstärker (z.B. einen Transimpedanzverstärker) 45₁, 45₂, ..., allgemein 45ᵢ, für das jeweilige Ausgangssignal 24ᵢ, eine an den Verstärker 45ᵢ angeschlossene Schaltung 46ᵢ zur Signalaufbereitung, insbesondere ein Filter, einen daran angeschlossenen Analog-Digital-Wandler 47ᵢ und/oder eine daran angeschlossene Schaltung 48ᵢ zur Signalerkennung im Digitalbereich. Der an alle Konditionierschaltungen 26ᵢ angeschlossene Kombiniererbaustein 27 fügt die einzelnen, in den Konditionierschaltungen 26ᵢ konditionierten Ausgangssignale 24ᵢ' der Photodioden 25ⱼ zusammen. Dazu kann er z.B. eine kombinierte Signalkonditionierung durchführen, eine weitere Filterung und/oder eine Signalselektion etc., wodurch die Laufzeit und daraus die Entfernung des Ziels 8 und allenfalls der Grenze 18 zwischen erstem und zweitem Medium 4, 9 besonders präzise ermittelt werden können.

Die Erfindung ist nicht auf die dargestellten Ausführungsformen beschränkt, sondern umfasst alle Varianten, Modifikationen und deren Kombinationen, die in den Rahmen der angeschlossen Ansprüche fallen.

## Patentansprüche

1. Vorrichtung zum Vermessen einer Umgebung (2), insbesondere eines Gewässerbodens (10), durch Laufzeitmessung eines daran reflektierten Laserstrahls (3), umfassend:
einen Lasersender (5) zum Aussenden des Laserstrahls (3) auf ein Ziel (8) in der Umgebung (2) als Sendestrahl (3'), wobei die Vorrichtung (1) von einem nicht oder wenig streuenden ersten Medium (4), insbesondere von Luft, umgeben und dem Ziel (8) ein stärker streuendes zweites Medium (9), insbesondere das Wasser des Gewässers (11), vorgelagert ist,
einen Empfänger (13) mit einer Detektionseinrichtung (14) zum Empfangen des an der Umgebung (2) in Richtung Empfänger (13) reflektierten Sendestrahls (3') als Empfangsstrahl (3"), mit einer den Empfangsstrahl (3") auf die Detektionseinrichtung (14) bündelnden Sammeloptik (15) und mit einem Sichtfeld (σ), das größer ist als die Divergenz (δ) des vom Lasersender (5) ausgesandten Laserstrahls (3), und
eine mit dem Lasersender (5) und dem Empfänger (13) verbundene Auswerteeinheit (16) zum Ermitteln der Laufzeit des Laserstrahls (3),
**dadurch gekennzeichnet, dass**
der Empfänger (5) dazu ausgebildet ist, einen ersten Strahlteil (19) des Empfangsstrahls (3"), welcher am Ziel (8) reflektiert wurde, und einen zweiten Strahlteil (23) des Empfangsstrahls (3"), welcher an der Grenze (18) zwischen erstem und zweitem Medium (4, 9) und/oder vom zweiten Medium (9) reflektiert wurde, voneinander zu trennen und in der Detektionseinrichtung (14) aus den getrennten ersten und zweiten Strahlteilen (19, 23) gesonderte Ausgangssignale (24ᵢ) zu erzeugen, wobei die Auswerteeinheit (16) dazu ausgebildet ist, die gesonderten Ausgangssignale (24ᵢ) der Detektionseinrichtung (14) zum Ermitteln der Laufzeit des Laserstrahls (3) getrennt auszulesen.

2. Vorrichtung nach Anspruch 1, **dadurch gekennzeichnet, dass** die Detektionseinrichtung (14) ein Array von Photodioden (25ⱼ) ist, wobei die Auswerteeinheit (16) dazu ausgebildet ist, deren Ausgangssignale (24ᵢ) einzeln oder nach Photodiodenclustern getrennt auszulesen.

3. Vorrichtung nach Anspruch 2, **dadurch gekennzeichnet, dass** die Auswerteeinheit (16) eine eigene Konditionierschaltung (26ᵢ) für jedes Ausgangssignal (24ᵢ) der Photodioden oder der Photodiodencluster zum Konditionieren des Ausgangssignals (24ᵢ) und einen gemeinsamen Kombiniererbaustein (27) zum variablen Kombinieren aller konditionierten Ausgangssignale (24ᵢ') umfasst.

4. Vorrichtung nach Anspruch 2 oder 3, **dadurch gekennzeichnet, dass** die Auswerteeinheit (16) dazu ausgebildet ist, die Ausgangssignale (24ᵢ) einer äußeren ersten Photodiodengruppe (28) getrennt von jenen eines kreisförmigen, von der ersten umgebenen zweiten Photodiodengruppe (29) des Arrays auszulesen.

5. Vorrichtung nach Anspruch 4, **dadurch gekennzeichnet, dass** die Auswerteeinheit (16) ferner dazu ausgebildet ist, die Ausgangssignale (24ᵢ) einer ringförmig zwischen der genannten ersten und der genannten zweiten Photodiodengruppe (28, 29) angeordneten dritten Photodiodengruppe (34) getrennt von jenen der beiden anderen Photodiodengruppen (28, 29) des Arrays auszulesen.

6. Vorrichtung nach einem der Ansprüche 2 bis 5, **dadurch gekennzeichnet, dass** ein Abstand (A) zwischen Detektionseinrichtung (14) und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf die Detektionseinrichtung (14) einzustellen.

7. Vorrichtung nach Anspruch 1, **dadurch gekennzeichnet, dass** die Detektionseinrichtung (14) einen ersten Detektor (14a) und einen vom ersten separaten zweiten Detektor (14b) umfasst, wobei die Ausgangssignale (24ᵢ) der Detektoren (14a, 14b) von der Auswerteeinheit (16) getrennt auslesbar sind, und dass der Empfänger (13) einen der Sammeloptik (15) im Empfangsstrahl (3") nachgeordneten Facettenspiegel (37) mit einer Mehrzahl von in einem Array angeordneten, einzeln oder in Clustern zwischen zumindest einer ersten und einer zweiten Stellung umschaltbaren Spiegelfacetten (38), bevorzugt einen MEMS-Facettenspiegel (37), und eine Ansteuerung (39) zum Umschalten der Spiegelfacetten (38) umfasst, wobei die Spiegelfacetten (38) den Empfangsstrahl (3") in der ersten Stellung auf den ersten Detektor (14a) und in der zweiten Stellung auf den zweiten Detektor (14b) reflektieren.

8. Vorrichtung nach Anspruch 7, **dadurch gekennzeichnet, dass** ein Abstand (B) zwischen Facettenspiegel (37) und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf den Facettenspiegel (37) einzustellen.

9. Vorrichtung nach Anspruch 8, **dadurch gekennzeichnet, dass** die Ansteuerung (39) dazu ausgebildet ist, eine äußere erste Spiegelfacettengruppe (40) getrennt von einer kreisförmigen, von der ersten umgebenen zweiten Spiegelfacettengruppe (41) des Facettenspiegels (37) anzusteuern, um die erste Spiegelfacettengruppe (40) in die genannte erste Stellung und die zweite Spiegelfacettengruppe (41) in die genannte zweite Stellung zu schalten.

10. Vorrichtung nach Anspruch 9, **dadurch gekennzeichnet, dass** die Detektionseinrichtung (14) ferner einen vom ersten und vom zweiten separaten dritten Detektor umfasst und die Ansteuerung (39) dazu ausgebildet ist, eine ringförmig zwischen der genannten ersten und der genannten zweiten Spiegelfacettengruppe (40, 41) liegende dritte Spiegelfacettengruppe getrennt von den anderen Spiegelfacettengruppen (40, 41) des Facettenspiegels (37) anzusteuern, um die erste Spiegelfacettengruppe (40) in die genannte erste Stellung, die zweite Spiegelfacettengruppe (41) in die genannte zweite Stellung und die dritte Spiegelfacettengruppe in eine dritte Stellung zu schalten, in welcher die Spiegelfacetten (38) den Empfangsstrahl (3") auf den dritten Detektor reflektieren.

11. Vorrichtung nach Anspruch 1, **dadurch gekennzeichnet, dass** die Detektionseinrichtung (14) einen ersten Detektor (14a) und einen vom ersten separaten zweiten Detektor (14b) umfasst, wobei die Ausgangssignale (24ᵢ) der Detektoren (14a, 14b) von der Auswerteeinheit (16) getrennt auslesbar sind, und dass der Empfänger (13) einen im Empfangsstrahl (3") zwischen der Sammeloptik (15) und dem ersten Detektor (14a) schräg angeordneten Spiegel (42) umfasst, dessen Durchmesser (d) kleiner ist als der von der Sammeloptik (15) gebündelte Empfangsstrahl (3") an der Stelle des Spiegels (42), wobei der Spiegel (42) den auf ihn auftreffenden Teil des Empfangsstrahls (3") auf den zweiten Detektor (14b) reflektiert.

12. Vorrichtung nach Anspruch 11, **dadurch gekennzeichnet, dass** ein Abstand (C) zwischen Spiegel (42) und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf den Spiegel (42) einzustellen.

13. Vorrichtung nach Anspruch 11 oder 12, **dadurch gekennzeichnet, dass** der Spiegel (42) quer zur Achse (44) des Empfangsstrahls (3") zwischen der Sammeloptik (15) und dem ersten Detektor (14a) verschieblich ist.

14. Vorrichtung nach Anspruch 1, **dadurch gekennzeichnet, dass** die Detektionseinrichtung (14) einen ersten Detektor (14a) und einen vom ersten separaten zweiten Detektor (14b) umfasst, wobei die Ausgangssignale (24ᵢ) der Detektoren (14a, 14b) von der Auswerteeinheit (16) getrennt auslesbar sind, und dass der Empfänger (13) einen im Empfangsstrahl (3") zwischen der Sammeloptik (15) und dem zweiten Detektor (14b) schräg angeordneten Ringspiegel umfasst, dessen Innendurchmesser kleiner ist als der von der Sammeloptik (15) gebündelte Empfangsstrahl (3") an der Stelle des Ringspiegels und größer ist als der zweite Strahlteil (23) an dieser Stelle, wobei der Ringspiegel den auf ihn auftreffenden Teil des Empfangsstrahls (3") auf den ersten Detektor (14a) reflektiert.

15. Vorrichtung nach Anspruch 14, **dadurch gekennzeichnet, dass** ein Abstand zwischen Ringspiegel und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf den Ringspiegel einzustellen.

16. Vorrichtung nach Anspruch 14 oder 15, **dadurch gekennzeichnet, dass** der Ringspiegel quer zur Achse (44) des Empfangsstrahls (3") zwischen der Sammeloptik (15) und dem zweiten Detektor (14b) verschieblich ist.

17. Vorrichtung nach einem der Ansprüche 1 bis 16, **dadurch gekennzeichnet, dass** die Vorrichtung (1) ferner dazu ausgebildet ist, die Divergenz (δ) des vom Lasersender (5) ausgesendeten Laserstrahls (3) zu steuern.

18. Vorrichtung nach einem der Ansprüche 1 bis 17, **dadurch gekennzeichnet, dass** die Vorrichtung (1) ferner über eine gemeinsame Scaneinheit (33) zum Scannen des Sendestrahls (3') und des Sichtfeldes (σ) des Empfängers (13) über die Umgebung (2) verfügt.

19. Vorrichtung nach einem der Ansprüche 1 bis 17, **dadurch gekennzeichnet, dass** die Vorrichtung (1) ferner über eine erste Scaneinheit zum Scannen des Sendestrahls (3') und über eine von der ersten separate zweite Scaneinheit zum Scannen des Sichtfeldes (σ) des Empfängers (13) über die Umgebung (2) verfügt.

## Geänderte Patentansprüche

### Geänderte Patentansprüche gemäss Regel 137(2) EPÜ.

1. Vorrichtung zum Vermessen einer Umgebung (2), insbesondere eines Gewässerbodens (10), durch Laufzeitmessung eines daran reflektierten Laserstrahls (3), umfassend:
einen Lasersender (5) zum Aussenden des Laserstrahls (3) auf ein Ziel (8) in der Umgebung (2) als Sendestrahl (3'), wobei die Vorrichtung (1) von einem nicht oder wenig streuenden ersten Medium (4), insbesondere von Luft, umgeben und dem Ziel (8) ein stärker streuendes zweites Medium (9), insbesondere das Wasser des Gewässers (11), vorgelagert ist,
einen Empfänger (13) mit einer Detektionseinrichtung (14) zum Empfangen des an der Umgebung (2) in Richtung Empfänger (13) reflektierten Sendestrahls (3') als Empfangsstrahl (3"), mit einer den Empfangsstrahl (3") auf die Detektionseinrichtung (14) bündelnden Sammeloptik (15) und mit einem Sichtfeld (σ), das größer ist als die Divergenz (δ) des vom Lasersender (5) ausgesandten Laserstrahls (3), und
eine mit dem Lasersender (5) und dem Empfänger (13) verbundene Auswerteeinheit (16) zum Ermitteln der Laufzeit des Laserstrahls (3),
wobei der Empfänger (5) dazu ausgebildet ist, einen ersten Strahlteil (19) des Empfangsstrahls (3"), welcher am Ziel (8) reflektiert wurde, und einen zweiten Strahlteil (23) des Empfangsstrahls (3"), welcher an der Grenze (18) zwischen erstem und zweitem Medium (4, 9) und/oder vom zweiten Medium (9) reflektiert wurde, voneinander zu trennen, wobei ein Bereich der Detektionseinrichtung (14) ausschließlich vom ersten Strahlteil (19) getroffen wird, und in der Detektionseinrichtung (14) aus den getrennten ersten und zweiten Strahlteilen (19, 23) gesonderte Ausgangssignale (24ᵢ) zu erzeugen, wobei die Auswerteeinheit (16) dazu ausgebildet ist, die gesonderten Ausgangssignale (24ᵢ) der Detektionseinrichtung (14) getrennt auszulesen und daraus die Laufzeit für den ersten Strahlteil (19) und den zweiten Strahlteil (23) getrennt zu ermitteln,
**dadurch gekennzeichnet, dass** die Detektionseinrichtung (14) ein Array von Photodioden (25ⱼ) ist, wobei die Auswerteeinheit (16) dazu ausgebildet ist, deren Ausgangssignale (24ᵢ) einzeln oder nach Photodiodenclustern getrennt auszulesen.

2. Vorrichtung nach Anspruch 1, **dadurch gekennzeichnet, dass** die Auswerteeinheit (16) eine eigene Konditionierschaltung (26ᵢ) für jedes Ausgangssignal (24ᵢ) der Photodioden oder der Photodiodencluster zum Konditionieren des Ausgangssignals (24ᵢ) und einen gemeinsamen Kombiniererbaustein (27) zum variablen Kombinieren aller konditionierten Ausgangssignale (24ᵢ') umfasst.

3. Vorrichtung nach Anspruch 1 oder 2, **dadurch gekennzeichnet, dass** die Auswerteeinheit (16) dazu ausgebildet ist, die Ausgangssignale (24ᵢ) einer äußeren ersten Photodiodengruppe (28) getrennt von jenen eines kreisförmigen, von der ersten umgebenen zweiten Photodiodengruppe (29) des Arrays auszulesen.

4. Vorrichtung nach Anspruch 3, **dadurch gekennzeichnet, dass** die Auswerteeinheit (16) ferner dazu ausgebildet ist, die Ausgangssignale (24ᵢ) einer ringförmig zwischen der genannten ersten und der genannten zweiten Photodiodengruppe (28, 29) angeordneten dritten Photodiodengruppe (34) getrennt von jenen der beiden anderen Photodiodengruppen (28, 29) des Arrays auszulesen.

5. Vorrichtung nach einem der Ansprüche 1 bis 4, **dadurch gekennzeichnet, dass** ein Abstand (A) zwischen Detektionseinrichtung (14) und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf die Detektionseinrichtung (14) einzustellen.

6. Vorrichtung zum Vermessen einer Umgebung (2), insbesondere eines Gewässerbodens (10), durch Laufzeitmessung eines daran reflektierten Laserstrahls (3), umfassend:
einen Lasersender (5) zum Aussenden des Laserstrahls (3) auf ein Ziel (8) in der Umgebung (2) als Sendestrahl (3'), wobei die Vorrichtung (1) von einem nicht oder wenig streuenden ersten Medium (4), insbesondere von Luft, umgeben und dem Ziel (8) ein stärker streuendes zweites Medium (9), insbesondere das Wasser des Gewässers (11), vorgelagert ist,
einen Empfänger (13) mit einer Detektionseinrichtung (14) zum Empfangen des an der Umgebung (2) in Richtung Empfänger (13) reflektierten Sendestrahls (3') als Empfangsstrahl (3"), mit einer den Empfangsstrahl (3") auf die Detektionseinrichtung (14) bündelnden Sammeloptik (15) und mit einem Sichtfeld (σ), das größer ist als die Divergenz (δ) des vom Lasersender (5) ausgesandten Laserstrahls (3), und
eine mit dem Lasersender (5) und dem Empfänger (13) verbundene Auswerteeinheit (16) zum Ermitteln der Laufzeit des Laserstrahls (3),
wobei der Empfänger (5) dazu ausgebildet ist, einen ersten Strahlteil (19) des Empfangsstrahls (3"), welcher am Ziel (8) reflektiert wurde, und einen zweiten Strahlteil (23) des Empfangsstrahls (3"), welcher an der Grenze (18) zwischen erstem und zweitem Medium (4, 9) und/oder vom zweiten Medium (9) reflektiert wurde, voneinander zu trennen, wobei ein Bereich der Detektionseinrichtung ausschließlich vom ersten Strahlteil (19) getroffen wird, und in der Detektionseinrichtung (14) aus den getrennten ersten und zweiten Strahlteilen (19, 23) gesonderte Ausgangssignale (24ᵢ) zu erzeugen, wobei die Auswerteeinheit (16) dazu ausgebildet ist, die gesonderten Ausgangssignale (24ᵢ) der Detektionseinrichtung (14) getrennt auszulesen und daraus die Laufzeit für den ersten Strahlteil (19) und den zweiten Strahlteil (23) getrennt zu ermitteln,
**dadurch gekennzeichnet, dass** die Detektionseinrichtung (14) einen ersten Detektor (14a) und einen vom ersten separaten zweiten Detektor (14b) umfasst, wobei die Ausgangssignale (24ᵢ) der Detektoren (14a, 14b) von der Auswerteeinheit (16) getrennt auslesbar sind, und dass der Empfänger (13) einen der Sammeloptik (15) im Empfangsstrahl (3") nachgeordneten Facettenspiegel (37) mit einer Mehrzahl von in einem Array angeordneten, einzeln oder in Clustern zwischen zumindest einer ersten und einer zweiten Stellung umschaltbaren Spiegelfacetten (38), bevorzugt einen MEMS-Facettenspiegel (37), und eine Ansteuerung (39) zum Umschalten der Spiegelfacetten (38) umfasst, wobei die Spiegelfacetten (38) den Empfangsstrahl (3") in der ersten Stellung auf den ersten Detektor (14a) und in der zweiten Stellung auf den zweiten Detektor (14b) reflektieren.

7. Vorrichtung nach Anspruch 6, **dadurch gekennzeichnet, dass** ein Abstand (B) zwischen Facettenspiegel (37) und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf den Facettenspiegel (37) einzustellen.

8. Vorrichtung nach Anspruch 7, **dadurch gekennzeichnet, dass** die Ansteuerung (39) dazu ausgebildet ist, eine äußere erste Spiegelfacettengruppe (40) getrennt von einer kreisförmigen, von der ersten umgebenen zweiten Spiegelfacettengruppe (41) des Facettenspiegels (37) anzusteuern, um die erste Spiegelfacettengruppe (40) in die genannte erste Stellung und die zweite Spiegelfacettengruppe (41) in die genannte zweite Stellung zu schalten.

9. Vorrichtung nach Anspruch 8, **dadurch gekennzeichnet, dass** die Detektionseinrichtung (14) ferner einen vom ersten und vom zweiten separaten dritten Detektor umfasst und die Ansteuerung (39) dazu ausgebildet ist, eine ringförmig zwischen der genannten ersten und der genannten zweiten Spiegelfacettengruppe (40, 41) liegende dritte Spiegelfacettengruppe getrennt von den anderen Spiegelfacettengruppen (40, 41) des Facettenspiegels (37) anzusteuern, um die erste Spiegelfacettengruppe (40) in die genannte erste Stellung, die zweite Spiegelfacettengruppe (41) in die genannte zweite Stellung und die dritte Spiegelfacettengruppe in eine dritte Stellung zu schalten, in welcher die Spiegelfacetten (38) den Empfangsstrahl (3") auf den dritten Detektor reflektieren.

10. Vorrichtung zum Vermessen einer Umgebung (2), insbesondere eines Gewässerbodens (10), durch Laufzeitmessung eines daran reflektierten Laserstrahls (3), umfassend:
einen Lasersender (5) zum Aussenden des Laserstrahls (3) auf ein Ziel (8) in der Umgebung (2) als Sendestrahl (3'), wobei die Vorrichtung (1) von einem nicht oder wenig streuenden ersten Medium (4), insbesondere von Luft, umgeben und dem Ziel (8) ein stärker streuendes zweites Medium (9), insbesondere das Wasser des Gewässers (11), vorgelagert ist,
einen Empfänger (13) mit einer Detektionseinrichtung (14) zum Empfangen des an der Umgebung (2) in Richtung Empfänger (13) reflektierten Sendestrahls (3') als Empfangsstrahl (3"), mit einer den Empfangsstrahl (3") auf die Detektionseinrichtung (14) bündelnden Sammeloptik (15) und mit einem Sichtfeld (σ), das größer ist als die Divergenz (δ) des vom Lasersender (5) ausgesandten Laserstrahls (3), und
eine mit dem Lasersender (5) und dem Empfänger (13) verbundene Auswerteeinheit (16) zum Ermitteln der Laufzeit des Laserstrahls (3),
wobei der Empfänger (5) dazu ausgebildet ist, einen ersten Strahlteil (19) des Empfangsstrahls (3"), welcher am Ziel (8) reflektiert wurde, und einen zweiten Strahlteil (23) des Empfangsstrahls (3"), welcher an der Grenze (18) zwischen erstem und zweitem Medium (4, 9) und/oder vom zweiten Medium (9) reflektiert wurde, voneinander zu trennen, wobei ein Bereich der Detektionseinrichtung (14) ausschließlich vom ersten Strahlteil (19) getroffen wird, und in der Detektionseinrichtung (14) aus den getrennten ersten und zweiten Strahlteilen (19, 23) gesonderte Ausgangssignale (24ᵢ) zu erzeugen, wobei die Auswerteeinheit (16) dazu ausgebildet ist, die gesonderten Ausgangssignale(24ᵢ) der Detektionseinrichtung (14) getrennt auszulesen und daraus die Laufzeit für den ersten Strahlteil (19) und den zweiten Strahlteil (23) getrennt zu ermitteln,
**dadurch gekennzeichnet, dass** die Detektionseinrichtung (14) einen ersten Detektor (14a) und einen vom ersten separaten zweiten Detektor (14b) umfasst, wobei die Ausgangssignale (24ᵢ) der Detektoren (14a, 14b) von der Auswerteeinheit (16) getrennt auslesbar sind, und dass der Empfänger (13) einen im Empfangsstrahl (3") zwischen der Sammeloptik (15) und dem ersten Detektor (14a) schräg angeordneten Spiegel (42) umfasst, dessen Durchmesser (d) kleiner ist als der von der Sammeloptik (15) gebündelte Empfangsstrahl (3") an der Stelle des Spiegels (42), wobei der Spiegel (42) den auf ihn auftreffenden Teil des Empfangsstrahls (3") auf den zweiten Detektor (14b) reflektiert.

11. Vorrichtung nach Anspruch 10, **dadurch gekennzeichnet, dass** ein Abstand (C) zwischen Spiegel (42) und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf den Spiegel (42) einzustellen.

12. Vorrichtung nach Anspruch 10 oder 11, **dadurch gekennzeichnet, dass** der Spiegel (42) quer zur Achse (44) des Empfangsstrahls (3") zwischen der Sammeloptik (15) und dem ersten Detektor (14a) verschieblich ist.

13. Vorrichtung zum Vermessen einer Umgebung (2), insbesondere eines Gewässerbodens (10), durch Laufzeitmessung eines daran reflektierten Laserstrahls (3), umfassend:
einen Lasersender (5) zum Aussenden des Laserstrahls (3) auf ein Ziel (8) in der Umgebung (2) als Sendestrahl (3'), wobei die Vorrichtung (1) von einem nicht oder wenig streuenden ersten Medium (4), insbesondere von Luft, umgeben und dem Ziel (8) ein stärker streuendes zweites Medium (9), insbesondere das Wasser des Gewässers (11), vorgelagert ist,
einen Empfänger (13) mit einer Detektionseinrichtung (14) zum Empfangen des an der Umgebung (2) in Richtung Empfänger (13) reflektierten Sendestrahls (3') als Empfangsstrahl (3"), mit einer den Empfangsstrahl (3") auf die Detektionseinrichtung (14) bündelnden Sammeloptik (15) und mit einem Sichtfeld (σ), das größer ist als die Divergenz (δ) des vom Lasersender (5) ausgesandten Laserstrahls (3), und
eine mit dem Lasersender (5) und dem Empfänger (13) verbundene Auswerteeinheit (16) zum Ermitteln der Laufzeit des Laserstrahls (3),
wobei der Empfänger (5) dazu ausgebildet ist, einen ersten Strahlteil (19) des Empfangsstrahls (3"), welcher am Ziel (8) reflektiert wurde, und einen zweiten Strahlteil (23) des Empfangsstrahls (3"), welcher an der Grenze (18) zwischen erstem und zweitem Medium (4, 9) und/oder vom zweiten Medium (9) reflektiert wurde, voneinander zu trennen, wobei ein Bereich der Detektionseinrichtung (14) ausschließlich vom ersten Strahlteil (19) getroffen wird, und in der Detektionseinrichtung (14) aus den getrennten ersten und zweiten Strahlteilen (19, 23) gesonderte Ausgangssignale (24ᵢ) zu erzeugen, wobei die Auswerteeinheit (16) dazu ausgebildet ist, die gesonderten Ausgangssignale (24ᵢ) der Detektionseinrichtung (14) getrennt auszulesen und daraus die Laufzeit für den ersten Strahlteil (19) und den zweiten Strahlteil (23) getrennt zu ermitteln,
**dadurch gekennzeichnet, dass** die Detektionseinrichtung (14) einen ersten Detektor (14a) und einen vom ersten separaten zweiten Detektor (14b) umfasst, wobei die Ausgangssignale (24ᵢ) der Detektoren (14a, 14b) von der Auswerteeinheit (16) getrennt auslesbar sind, und dass der Empfänger (13) einen im Empfangsstrahl (3") zwischen der Sammeloptik (15) und dem zweiten Detektor (14b) schräg angeordneten Ringspiegel umfasst, dessen Innendurchmesser kleiner ist als der von der Sammeloptik (15) gebündelte Empfangsstrahl (3") an der Stelle des Ringspiegels und größer ist als der zweite Strahlteil (23) an dieser Stelle, wobei der Ringspiegel den auf ihn auftreffenden Teil des Empfangsstrahls (3") auf den ersten Detektor (14a) reflektiert.

14. Vorrichtung nach Anspruch 13, **dadurch gekennzeichnet, dass** ein Abstand zwischen Ringspiegel und Sammeloptik (15) veränderlich und/oder die Sammeloptik (15) fokussierbar ist, und dass die Vorrichtung (1) dazu ausgebildet ist, die Bildebene (ε) der genannten Grenze (18) zwischen erstem und zweitem Medium (4, 9) auf den Ringspiegel einzustellen.

15. Vorrichtung nach Anspruch 13 oder 14, **dadurch gekennzeichnet, dass** der Ringspiegel quer zur Achse (44) des Empfangsstrahls (3") zwischen der Sammeloptik (15) und dem zweiten Detektor (14b) verschieblich ist.

16. Vorrichtung nach einem der Ansprüche 1 bis 15, **dadurch gekennzeichnet, dass** die Vorrichtung (1) ferner dazu ausgebildet ist, die Divergenz (δ) des vom Lasersender (5) ausgesendeten Laserstrahls (3) zu steuern.

17. Vorrichtung nach einem der Ansprüche 1 bis 16, **dadurch gekennzeichnet, dass** die Vorrichtung (1) ferner über eine gemeinsame Scaneinheit (33) zum Scannen des Sendestrahls (3') und des Sichtfeldes (σ) des Empfängers (13) über die Umgebung (2) verfügt.

18. Vorrichtung nach einem der Ansprüche 1 bis 16, **dadurch gekennzeichnet, dass** die Vorrichtung (1) ferner über eine erste Scaneinheit zum Scannen des Sendestrahls (3') und über eine von der ersten separate zweite Scaneinheit zum Scannen des Sichtfeldes (σ) des Empfängers (13) über die Umgebung (2) verfügt.
